## Europäisches Patentamt
## European Patent Office
## Office européen des brevets

(19)

(11) Veröffentlichungsnummer: **0 089 701**
A1

(12) # EUROPÄISCHE PATENTANMELDUNG

(21) Anmeldenummer: **83200257.0**

(22) Anmeldetag: **19.02.83**

(51) Int. Cl.³: **C 21 B 13/08**

(30) Priorität: **11.03.82 DE 3208701**

(43) Veröffentlichungstag der Anmeldung:
**28.09.83 Patentblatt 83/39**

(84) Benannte Vertragsstaaten:
**BE DE FR GB IT SE**

(71) Anmelder: **METALLGESELLSCHAFT AG
Reuterweg 14 Postfach 3724
D-6000 Frankfurt/M.1(DE)**

(72) Erfinder: **Fischer, Karl-Heinz
Nachtigallenstrasse 42
D-6078 Neu-Isenburg(DE)**

(72) Erfinder: **Schnabel, Wolfram, Dr.
Thomas-Mann-Strasse 7
D-6270 Idstein(DE)**

(72) Erfinder: **Serbent, Harry, Dr.
Gustav-Hoch-Strasse 5 d
D-6450 Hanau 1(DE)**

(74) Vertreter: **Fischer, Ernst, Dr.
Reuterweg 14
D-6000 Frankfurt am Main 1(DE)**

(54) Verfahren zur Direktreduktion von eisenoxidhaltigen Materialien zu Eisenschwamm im Drehrohrofen.

(57) Der Drehrohrofen wird unter Einsatz von festen Reduktionsmitteln mit hohem Anteil an flüchtigen Bestandteilen unter Gleichstromführung von Breschickung und Gasatmosphäre mit einem Zentralbrenner am Eintragende betrieben. Zur Vermeidung einer hohen Heizraumbelastung in der Aufheizzone und trotzdem Erhöhung der Aufheizgeschwindigkeit werden mit dem eisenoxidhaltigen Material festes, kohlenstoffhaltiges Reduktionsmittel mit hohem Gehalt an flüchtigen Bestandteilen in das Eintragsende des Drehrohrofens chargiert, in der Aufheizzone sauerstoffhaltige Gase mittels Düsensteinen in den freien Gasraum und in die Beschickung geblasen, und in der Reduktionszone sauerstoffhaltige Gase mittels Düsensteinen in den freien Ofenraum geblasen.

EP 0 089 701 A1

METALLGESELLSCHAFT
Aktiengesellschaft
Reuterweg 14
Frankfurt/Main

10. März 1982
SCHR/594/HFA

0089701

Prov. Nr. 8879 LC

## Verfahren zur Direktreduktion von eisenoxidhaltigen Materialien zu Eisenschwamm im Drehrohrofen

Die Erfindung betrifft ein Verfahren zur Direktreduktion von eisenoxidhaltigen Materialien zu Eisenschwamm im Drehrohrofen unterhalb des Erweichungs- und Schmelzpunktes der Beschickung, wobei feste, kohlenstoffhaltige Reduktionsmittel mit hohem Anteil an flüchtigen Bestandteilen eingesetzt werden, sauerstoffhaltige Gase über die Länge des Drehrohrofens verteilt durch den Mantel eingeblasen werden, die Beschickung und Gasatmosphäre im Gleichstrom durch den Ofen geführt werden, und heiße Gase mittels eines Zentralbrenners in das Eintragsende geleitet werden.

Ein im Gleichstrom betriebener Drehrohrofen hat gegenüber einem im Gegenstrom betriebenen Drehrohrofen beim Verfahren der Direktreduktion gewisse Vorteile. Wenn nur eine Teilreduktion bis zu einer Metallisierung von 30 bis 65 % gewünscht ist, kann diese unter stabilen Betriebsbedingungen erreicht werden. Außerdem ist es möglich, mit feinkörnigerer Reduktionskohle zu arbeiten, ohne daß größere Mengen an unverbranntem Kohlenstoff von den Abgasen mitgerissen und aus dem Ofen ausgetragen werden.

Zur Aufheizung der Beschickung ist ein Zentralbrenner am Eintragsende des Drehrohrofens erforderlich. Die Aufheizgeschwindigkeit ist von der Temperatur der Heizgase des Brenners abhängig. Deshalb werden die Heizgase mit möglich hoher Temperatur in den Drehrohrofen eingeleitet. Dadurch tritt aber starker Verschleiß der Auskleidung des Drehrohrofens und Kohlenstoff-Abbrand des in das Eintragsende chargierten festen Reduktionsmittels ein. Wenn Kohlen mit hohem Anteil an flüchtigen Bestandteilen als Reduktionsmittel in das Eintragsende des
Drehrohrofens chargiert werden, werden die flüchtigen Bestandteile sehr schnell ausgetrieben und kommen für eine Freisetzung von Energie in der Aufheizzone praktisch nicht zur Wirkung. Da für die Schwelung Wärme verbraucht wird, bewirken sie
sogar einen noch höheren Wärmebedarf in der Aufheizzone und
damit eine noch höhere Heizraumbelastung der Aufheizzone.
Außerdem führen sie zu unkontrollierten Verbrennungen.

Aus diesem Grunde wurden Kohlen mit hohem Anteil an flüchtigen
Bestandteilen nicht in das Eintragsende des Drehrohrofens
chargiert sondern vom Eintragsende mittels Luft eingeblasen,so
daß mindestens ein Teil über die Aufheizzone hinweg direkt in
die Reduktionszone geblasen wird (DE-AS 1583954, DE-AS
1927558). Dadurch treten aber unkontrollierte Verbrennungen
ein, die zur Ansatzbildung und zur Beschädigung der Mantelrohre in der Reduktionszone führen.

Der Erfindung liegt die Aufgabe zugrunde, eine hohe Heizraumbelastung in der Aufheizzone beim Gleichstromverfahren zu vermeiden und trotzdem die Aufheizgeschwindigkeit der Beschickung
zu erhöhen.

Die Lösung dieser Aufgabe erfolgt erfindungsgemäß dadurch, daß
mit dem eisenoxidhaltigen Material festes, kohlenstoffhaltiges
Reduktionsmittel mit hohem Gehalt an flüchtigen Bestandteilen
in das Eintragsende des Drehrohrofens chargiert wird, in der
Aufheizzone sauerstoffhaltige Gase mittels Düsensteinen in den
freien Gasraum und in die Beschickung geblasen werden, und in
der Reduktionszone sauerstoffhaltige Gase mittels Düsensteinen
in den freien Ofenraum geblasen werden.

Das feste, kohlenstoffhaltige Material enthält mindestens 15 % flüchtige Bestandteile. Vorzugsweise werden Braunkohlen eingesetzt. Unter dem Ausdruck "Düsensteine" sind Gaszuführungsvorrichtungen zu verstehen, welche die Ofenwand und die feuerfeste Auskleidung des Drehrohrofens durchdringen und deren Austrittsöffnungen in der Ebene der inneren Oberfläche der feuerfesten Auskleidung oder kurz darüber oder darunter liegen. Die Düsensteine können aus keramischen oder metallischen Werkstoffen bestehen. Die Düsensteine sind an jeder Einblasstelle ringförmig in bestimmten Abständen in radialer Richtung über den Umfang des Ofens verteilt angeordnet, wobei die Abstände auf dem Umfang im allgemeinen mindestens 2,5 bis 3,5 m betragen. In bestimmten Abständen von mindestens 2,5 bis 3,5 m sind dann weitere Düsensteine angeordnet. Diese Abstände reichen im allgemeinen aus, um genügend Sauerstoff einblasen zu können und eine gute Verteilung und Durchmischung zu erzielen. Jeder Ring von Düsensteinen kann an eine gemeinsame ringförmige Zuleitung für die Gase angeschlossen werden. In der Aufheizzone werden alle Düsensteine eines Ringes ständig mit sauerstoffhaltigem Gas - im allgemeinen Luft - versorgt. Falls der Druckabfall in den Düsensteinen unter der Beschickung zu groß wird, können die Düsensteine, die in den freien Ofenraum blasen, gedrosselt werden. In der Reduktionszone wird die Luftzufuhr zu den Düsensteinen unterbrochen, solange der jeweilige Düsenstein sich unter der Beschickung befindet und von dieser bedeckt ist. Der erste Ring der Düsensteine ist kurz hinter dem Eintragsende des Drehrohrofens angeordnet. Durch die hohe Temperatur der Heizgase des Zentralbrenners erreichen einzelne Teilchen des festen Reduktionsmittels sehr schnell die Zündtemperatur von etwa 300 °C auf der Oberfläche des Beschickungsbettes. Durch die Rollbewegung des Beschickungsbettes werden sie in das Innere des Bettes gezogen, das wesentlich kälter ist, wo sie ohne das Einblasen von Sauerstoff wieder abkühlen würden. Durch das Einblasen des Sauerstoffs wird ihre Verbrennung weitergeführt, ihre flüchtigen Bestandteile freigesetzt und in der Beschickung verbrannt. Dadurch werden andere Teilchen des festen Reduktionsmittels in der Beschikkung ebenfalls auf Zündtemperatur gebracht, wodurch eine Art
Kettenreaktion erfolgt und ein beträchtlicher Teil der zur
Aufheizung der Beschickung erforderlichen Wärmemenge im Beschickungsbett selbst entwickelt und übertragen wird. Derjenige Teil der ausgetriebenen flüchtigen Bestandteile, der
nicht im Beschickungsbett selbst verbrannt oder vollständig
verbrannt werden kann, wird im freien Ofenraum durch den dort
von den Düsensteinen eingeblasenen Sauerstoff verbrannt. Die
Aufheizzone erstreckt sich bis zu einer Länge des Drehrohrrofens, wo die Beschickung etwa auf die gewünschte Temperatur
für die Reduktionszone aufgeheizt ist. In der Reduktionszone
erfolgt die Reduktion zu metallischem Eisen. In der Aufheizzone werden höhere Eisenoxide zu niederen Eisenoxiden reduziert, wenn die erforderliche Temperatur und Gaszusammensetzung vorhanden ist.

Eine vorzugsweise Ausgestaltung besteht darin, daß für eine
Metallisierung über 30 % im letzten Teil der Reduktionszone
sauerstoffhaltige Gase mittels Mantelrohren in den freien
Ofenraum geblasen werden. Die Mantelrohre sind in radialer
Richtung angeordnet und ihre Austrittsöffnungen liegen etwa in
der Mitte des Querschnittes des Ofens und sind parallel zu der
Längsachse des Ofens angeordnet. Die Austrittsöffnungen werden
also nicht von der Beschickung bedeckt, so daß pro Einblasstelle jeweils nur ein Mantelrohr notwendig ist. Der letzte
Teil der Reduktionszone beträgt etwa 30 bis 50 % der gesamten Reduktionszone. Dadurch ist es möglich, eine höhere Metallisierung mit nur etwa 1 bis 3 Mantelrohren zu erzielen.

Eine vorzugsweise Ausgestaltung besteht darin, daß 50 bis 80 %
des gesamten in den Drehrohrofen eingeblasenen Sauerstoffs in
die Aufheizzone geblasen werden. Dadurch werden sehr gute Betriebsverhältnisse erzielt.

Eine vorzugsweise Ausgestaltung besteht darin, daß 10 bis 50 %
des gesamten eingeblasenen Sauerstoffs in die Beschickung in
der Aufheizzone geblasen werden. Dadurch werden besonders gute Betriebsverhältnisse erzielt.

Eine vorzugsweise Ausgestaltung besteht darin, daß der Zentralbrenner mit einem unterstochiometrischen Luftverhältnis betrieben wird.

Dabei wird in den freien Ofenraum der Aufheizzone über Düsensteine Sekundarluft für die Brennergase eingeleitet. Dadurch kann die Flamme des Zentralbrenners über eine größere Länge der Aufheizzone gestreckt werden. Dadurch wird die Heizraumbelastung gesenkt.

## Ausführungsbeispiele

Der Drehrohrofen hatte eine Länge von 60 m und einen Innendurchmesser von 4 m. Er wurde mit 48 t/h beschickt. Pro Tonne Erz wurden 435 kg Kohle, 40 kg Quarzit und 220 kg Dolomit chargiert. Die Kohle enthielt 31 Gew.-% brennbare, flüchtige Bestandteile.

## Beispiel 1 (Stand der Technik)

Der Drehrohrofen war nicht mit Düsensteinen ausgerüstet. Die Länge der Aufheizzone betrug 35 m. Die Temperatur der Beschickung betrug am Ende der Aufheizzone 1000 $^{o}$C und am Ende der Reduktionszone 1050 $^{o}$C. Die entsprechenden Gästemperaturen waren 1350 $^{o}$C und 1150 $^{o}$C. Die Metallisierung betrug 10 %.

## Beispiel 2

Der Drehrohrofen war mit 12 ringförmig angeordneten Reihen von Düsensteinen ausgerüstet. Die erste Reihe lag 3 m hinter dem Beschickungsende und die letzte 36 m vor dem Austragsende. Jede Reihe bestand aus 4 Düsensteinen.

Die Länge der Aufhheizzone betrug 20 m. Die Temperatur der Beschickung betrug am Ende der Aufheizzone 1000 $^{o}$C und am Ende der Reduktionszone 1050 $^{o}$C. Die entsprechenden Gastemperaturen waren 1200 $^{o}$C und 1100 $^{o}$C. Die Metallisierung betrug 28 %.

Beispiel 3

Der Drehrohrofen war - wie im Beispiel 2 - mit Düsensteinen ausgerüstet. Zusätzlich waren zwei Mantelrohre bei einer Länge von 40 und 50 m angeordnet.

Die Betriebsbedingungen entsprachen denen des Beispiels 2 mit folgenden Unterschieden: Die Gastemperatur am Ende der Reduktionszone betrug 1150 $^{o}$C und die Metallisierung betrug 35 %.

Die Vorteile der Erfindung bestehen darin, daß die Heizraumbelastung in der Aufheizzone bei gleicher Durchsatzleistung beträchtlich gesenkt oder bei gleichbleibender Heizraumbelastung die Durchsatzleistung beträchtlich gesteigert weden kann. Außerdem können gasreiche, billige, feste Reduktionsmittel in einfacher Weise verwendet werden, ohne daß die Betriebsweise nachträglich beeinflußt wird.

- 7 -

0089701

Patentansprüche

1) Verfahren zur Direktreduktion von eisenoxidhaltigen Materialien zu Eisenschwamm im Drehrohrofen unterhalb des Erweichungs- und Schmelzpunktes der Beschickung, wobei feste,
kohlenstoffhaltige Reduktionsmittel mit hohem Anteil an
flüchtigen Bestandteilen eingesetzt werden, sauerstoffhaltige Gase über die Länge des Drehrohrofens verteilt durch
den Mantel eingeblasen werden, die Beschickung und Gasatmosphäre im Gleichstrom durch den Ofen geführt werden,
und heiße Gase mittels eines Zentralbrenners in das Eintragsende geleitet werden, dadurch gekennzeichnet, daß mit
dem eisenoxidhaltigen Material festes, kohlenstoffhaltiges
Reduktionsmittel mit hohem Gehalt an flüchtigen Bestandteilen in das Eintragsende des Drehrohrofens chargiert
wird, in der Aufheizzone sauerstoffhaltige Gase mittels
Düsensteinen in den freien Gasraum und in die Beschickung
geblasen werden, und in der Reduktionszone sauerstoffhaltige Gase mittels Düsensteinen in den freien Ofenraum geblasen werden.

2) Verfahren nach Anspruch 1, dadurch gekennzeichnet, daß für
eine Metallisierung über 30 % im letzten Teil der Reduktionszone sauerstoffhaltige Gase mittels Mantelrohren in
den freien Ofenraum geblasen werden.

3) Verfahren nach Anspruch 1 oder Anspruch 2, dadurch gekennzeichnet, daß 50 bis 80 % des gesamten eingeblasenen Sauerstoffs in die Aufheizzone geblasen werden.

4) Verfahren nach einem der Ansprüche 1 bis 3, dadurch gekennzeichnet, daß 10 bis 50 % des gesamten eingeblasenen Sauerstoffs in die Beschickung in der Aufheizzone geblasen wird.

0089701

5) Verfahren nach einem der Ansprüche 1 bis 4, dadurch gekennzeichnet, daß der Zentralbrenner mit einem unterstochiometrischen Luftverhältnis betrieben wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | GB-A- 636 677 (TITAN CY.)<br>* Ansprüche 1-7 *<br><br>--- | 1 | C 21 B 13/08 |
| Y | DE-A-2 719 422<br>(METALLGESELLSCHAFT)<br>* Ansprüche 1-5 *<br><br>--- | 1 | |
| A | DE-A-2 239 605 (NIPPON KOKAN)<br>* Ansprüche 1,2; Figuren 1-5 *<br><br>--- | 1 | |
| A | DE-C- 641 703 (F. KRUPP<br>GRUSONWERK)<br>* Ansprüche 1-3 *<br><br>--- | 1 | |
| A | DE-A-2 241 168<br>(METALLGESELLSCHAFT)<br><br>--- | | **RECHERCHIERTE SACHGEBIETE (Int. Cl. ³)** |
| A | DE-A-2 653 512<br>(METALLGESELLSCHAFT)<br><br>--- | | C 21 B<br>F 27 B |
| A | US-A-2 107 549 (H. SCHMALFELDT)<br><br>--- | | |
| A | US-A-4 304 597 (V.P. KERAN)<br><br>----- | | |

Der vorliegende Recherchenbericht wurde für alle Patentansprüche erstellt.

| Recherchenort<br>DEN HAAG | Abschlußdatum der Recherche<br>13-06-1983 | Prüfer<br>ELSEN D.B.A. |
|---|---|---|